# EUROPEAN PATENT SPECIFICATION

(11) **EP 2 157 747 B1**
(45) Date of publication and mention of the grant of the patent: **23.05.2012**
(21) Application number: 09157870.8
(22) Date of filing: 14.04.2009
(51) Int. Cl.: H04L 12/58, H04L 29/06, H04N 5/00

(54) **Method, system and apparatus for displaying an instant message**
Verfahren, System und Vorrichtung zur Anzeige von Sofortnachrichten
Procédé, système et appareil pour afficher un message instantané

(30) Priority: 21.08.2008 CN 200810147155
(43) Date of publication of application: 24.02.2010
(73) Proprietor: Huawei Technologies Co., Ltd., Longgang District, Shenzhen Guangdong 518129 (CN)
(72) Inventor: Yu, Xiaojian, 518129, Shenzhen Guandong (CN)
(74) Representative: Körber, Martin Hans

(56) References cited:
- EP-A- 1 892 906
- US-A1- 2007 136 777
- HEWLETT-PACKARD COMPANY ET AL: "Method for instant messaging in IP TV" RESEARCH DISCLOSURE, MASON PUBLICATIONS, HAMPSHIRE, GB, vol. 527, no. 21, 1 March 2008 (2008-03-01), page 221, XP007138018 ISSN: 0374-4353

## Description

### FIELD OF THE INVENTION

The present invention relates to communication technologies, and in particular, to a method, system and apparatus for displaying an instant message.

### BACKGROUND

Internet Protocol Television, IPTV, is a technology which provides multiple interactive services such as digital TV for home users through a broadband cabled television network by integrating the Internet, multimedia and communication technologies. The IPTV caters for the trend of the rocketing development of networks nowadays, and utilizes the network resources efficiently.

The IPTV uses the computer or Set Top Box (STB) plus a computer to implement the functions such as Video On Demand (VOD) programs, video broadcast and cyber surfing. The IPTV is based on the efficient video compression technology so that the program effect verges on a Digital Video Disk (DVD) when the transmission bandwidth of the video stream is 800 Kb/s. The IPTV is characterized by flexible interaction. The programs of the IPTV may be released through broadcast, multicast and unicast within the network, and support multiple functions flexibly such as electronic menus, program reservation, real-time fast forward, fast backward, terminal account number and charging management, and program scheduling.

The IPTV system structure mainly includes the following subsystems: streaming service subsystem, program compilation subsystem, storage subsystem, and Authentication Authorization Accounting, AAA, subsystem. The contents stored and transferred in IPTV system are streaming files.

With the development of the IPTV, the IPTV instant message attracts more and more attention. The IPTV instant message may convey daily life information such as weather, news and announcements, and may publish value-added information such as TV program parade, reminder of a reserved program, interactive comment, voting and guess competition, and even commercial advertisements.

Currently, the IPTV system generally displays the IPTV instant messages through TV rolling captions. However, the TV rolling captions provide monotone text information, and are unable to implement promotion pictures or program interaction, or send correlated messages specific to a user or program. If the program is intercut with an IPTV instant message through an advertisement server, the user incurs interruption of watching the program, and the user experience is affected. Besides, the deployment of advertisement servers is complicated, and the upgrade and reconstruction of devices are costly.

The patent application EP 1892906A discloses an apparatus and method for displaying an instant message in a mobile terminal. The apparatus includes an input unit for receiving a character string composing the instant message; a converter for converting the instant message into XML; a message processor for, upon receipt for a character string set with one or more fonts from the input unit, controlling and creating the instant message comprising the character string, converting the instant message with one or more fonts into XML by the converter, and sending the converted instant message; and a communication unit for sending and receiving the converted instant message.

One public document "Method for instant messaging in IPTV" is issued on RESEARCH DISCLOSUR, MASON PUBLICATIONS, HAMPSHIRE, GB, vol. 527, no. 21, 1 March 2008 (2008-03-01), page 221, XP 007138018 ISSN: 0374-4353. This document discloses a non-intrusive instant messaging system for the IPTV. The ticker tape is used to display in an optimized window located at the edge of the screen to minimize the overlap area of video content. This method allows users of future IPTV to share instant message non-intrusively when still enjoy the main programming.

The patent application US 2007/0136777 A1 discloses apparatus and methods for efficiently and flexibly providing caption data (e.g., closed captioning) to subscribers of a content-based network, such as for example Internet protocol television (IPTV) subscribers.

### SUMMARY

A method, system and apparatus for displaying an instant message are provided in an embodiment of the present invention to display instant messages in real time.

A method for displaying an instant message in an IPTV environment in an embodiment of the present invention includes:
receiving, by a message processing server, a message task file comprising packed message metadata, wherein the message task file is generated by a message management apparatus;
obtaining, by the message processing server, message metadata carried in the message task file, wherein the message metadata includes message attributes, delivery rules and message body;
generating, by the message processing server, a message display page file according to the obtained message metadata;
generating, by the message processing server, an instant message according to the message metadata, wherein the instant message includes a Uniform Resource Locator, URL, of the message display page file, the message attributes and the delivery rules; and
delivering, by the message processing server, the message display page file and the instant message to make a message display apparatus obtain the message display page file according to the URL included in the instant message and display the message display page file.

A system for displaying an instant message in an IPTV environment in an embodiment of the present invention includes:
a message processing server, adapted to receive a message task file comprising packed message metadata, wherein the message task file is generated by a message management apparatus; obtain message metadata carried in the message task file, wherein the message metadata includes message attributes, delivery rules and message body; generate a message display page file according to the obtained message metadata; generate an instant message_according to the message metadata, wherein the instant message includes a Uniform Resource Locator, URL, of the message display page file, the message attributes, and the delivery rules; and deliver the message display page file and the instant message; and a message display apparatus, adapted to obtain the instant message, obtain the message display page file according to the URL included in the instant message, and display the message display page file.

A message processing server for displaying an instant message in an IPTV environment provided in an embodiment of the present invention includes:
a message task receiving module, adapted to receive a message task file comprising packed message metadata, wherein the message task file is generated by a message management apparatus;
a task resolving module, adapted to obtain message metadata carried in the message task file, wherein the message metadata includes message attributes, delivery rules and message body;
a message page generating module, adapted to generate a message display page file according to the obtained message metadata;
a instant message generating module, adapted to generate an instant message according to the message metadata, wherein the instant message includes a Uniform Resource Locator, URL, of the message display page file, the message attributes and the delivery rules; and
a message delivering module, adapted to deliver the message display page file generated by the message page generating module and the instant message generated by the instant message generating module to make a message display apparatus obtain the message display page file according to the URL included in the instant message and display the message display page file.

A method, system and apparatus for displaying an instant message are provided in an embodiment of the present invention to display instant messages in real time without interrupting play of the TV program or deteriorating the effect of watching the TV program, and fulfill the purpose of advertisement. As regards system construction, only a few devices need to be added and deployed simply, almost without affecting the existing IPTV system.

### BRIEF DESCRIPTION OF THE DRAWING

In order to make the technical solution under the present invention clearer, the accompanying drawings for illustrating the embodiments of the present invention are introduced briefly below. Evidently, the accompanying drawings are only preferred embodiments of the present invention, and those skilled in the art can derive other drawings from such accompanying drawings without making any creative effort.

Figure 1 shows a structure of a system for displaying an instant message according to an embodiment of the present invention;

Figure 2 shows a structure of a message management apparatus according to an embodiment of the present invention;

Figure 3 shows a message task file according to an embodiment of the present invention;

Figure 4 shows a structure of a message processing server according to an embodiment of the present invention;

Figure 5 shows a structure of a message gateway according to an embodiment of the present invention;

Figure 6 shows a structure of a message display apparatus according to an embodiment of the present invention;

Figure 7 shows another structure of a message display apparatus according to an embodiment of the present invention; and

Figure 8 is a flowchart of a method for displaying an instant message according to an embodiment of the present invention.

### DETAILED DESCRIPTION

The technical solution under the present invention is elaborated below by reference to accompanying drawings. Evidently, the embodiments described below are for the exemplary purpose only, without covering all embodiments of the present invention. All other embodiments derived by those skilled in the art from the embodiments herein without making any creative effort are covered in the protection scope of the present invention.

A system for displaying an instant message provided in an embodiment of the present invention is an instant message display system oriented to an STB in the IPTV environment. First, the message management apparatus collect the message metadata and message display polices in. Such information is delivered as message task files to the message processing server for processing, and forms message display page files which are finally displayed to the user and deployed on the message page server. Meanwhile, an instant message is generated and delivered to the message gateway. After the STB is powered on, the instant message is requested on the message gateway periodically or as triggered. For the instant messages compliant with preset conditions, the STB requests the message page server for the message display page files in real time and displays to the user instantly.

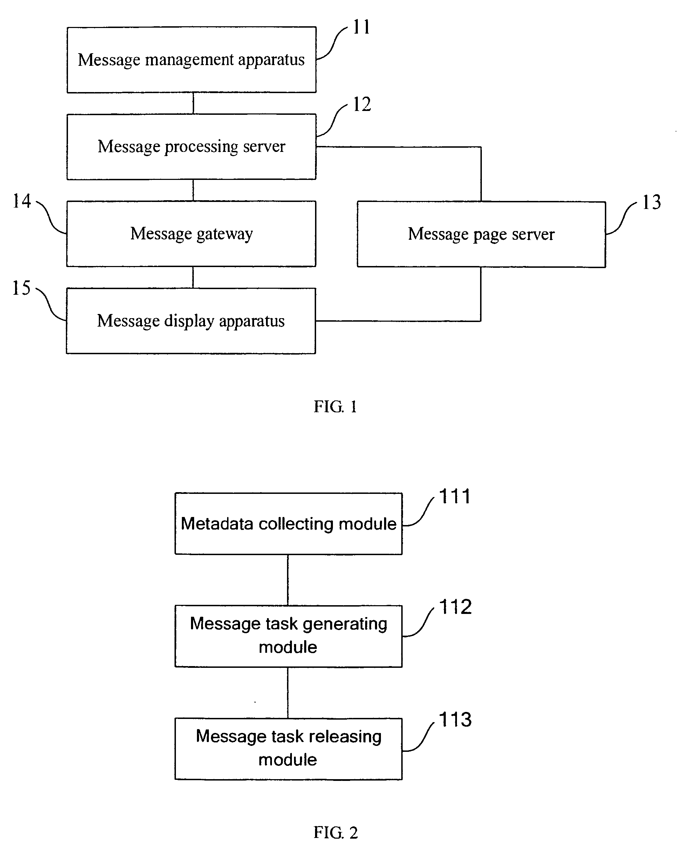

As shown in Figure 1, the system for displaying an instant message according to an embodiment of the present invention includes: a message management apparatus 11, a message processing server 12, a message page server 13, a message gateway 14, and a message display apparatus 15.

The message management apparatus 11 is adapted to collect the message metadata input by the user, packet the message metadata input by the user into a message task file, and deliver the message task file to the message processing server 12.

The message management apparatus 11 can not only packet the message metadata into a message task file, but also packet the message metadata in other packet modes, for example, packet the message metadata into an object or command.

In this embodiment, the message metadata includes message attributes, delivery rules, and message body.

The message processing server 12 is adapted to resolve the message task file sent by the message management apparatus 11, obtain the message metadata carried in the message task file, generate a message display page file according to the obtained message metadata, generate an instant message and deliver the message display page file and the instant message.

The message processing server 12 delivers the message display page file in the active Pull mode or passive Push mode.

The message display page file generated by the message processing server 12 may be in the HyperText Markup Language, HTML, format or other page file formats such as Java Server Page, JSP.

The message page server 13, for example, a web server, is adapted to receive the message display page file delivered by the message processing server 12 and deploy the message display page file.

The message gateway 14 is adapted to receive instant messages delivered by the message processing server 12, where the instant message carries the information such as Uniform Resource Locator, URL, message attributes, and delivery rules of the message display page file,, and perform classified buffering for the instant messages delivered by the message processing server 12 according to the message attributes of the message display page file.

The message attributes include time of displaying the instant message and program content corresponding to the instant message. All instant messages may be classified in two dimensions according to the time of displaying the message and the program content that matches the message, as shown in Table 1:

**Table 1**

| | Absolute time message | Relative time message |
|---|---|---|
| Content-related message | Live program message | On-demand program message |
| Content-unrelated message | Power-on message/notification message | - |

The absolute time message of content-unrelated message may also be regarded as an absolute time message correlated with all contents.

For example, the message gateway 14 may buffer messages relative time message queue and absolute time message queue. For the periodical request sent periodically by the message display apparatus 15, the message gateway 14 searches for the instant message compliant with the delivery rules from the absolute time message queue and returns the instant messages to the message display apparatus 15. For the relative time message request sent (at a time) by the message display apparatus 15 as triggered, the message gateway 14 searches for the instant message compliant with the delivery rules from the relative time message queue, and returns the instant message to the message display apparatus 15.

The message processing server 12, message page server 13 and message gateway 14 may be collectively called a message processing platform.

The message display apparatus 15 is adapted to obtain the instant message, and obtain the message display page file according to the instant message for displaying.

For example, when obtaining an instant message, the message display apparatus 15 may directly receive the instant message delivered by the message processing server 12 , or, directly receive the instant message delivered by the message gateway 14. For another example, the message display apparatus 15 may request the message gateway 14 for the instant message periodically or as triggered, scan the instant message returned by the message gateway 14, request the message page server 13 for the message display page file according to the information such as URL, message attributes and delivery rules of the message display page file in the instant message returned by the message gateway 14, and display the obtained message display page file.

Specifically, when requesting the message gateway 14 for an instant message, the message display apparatus 15 may send one or both of the two request messages, namely, a relative time message and an absolute time message. For the absolute time message, the message display apparatus 15 sends a request to the message gateway 14 periodically at specified time to request an absolute time message. For the relative time information, the message display apparatus 15 sends a request to the message gateway 14 to request a relative time message only if the user switches to an on-demand program or switches between on-demand programs. On-demand programs include VOD programs and games.

The requests sent by the message display apparatus 15 to request the message page server 13 for the message display page file include but are not limited to Hypertext Transfer Protocol, HTTP, requests.

The message display apparatus 15 may be an STB or other intelligent terminals such as mobile station and Personal Computer, PC, software which simulates the STB.

Figure 2 shows a structure of a message management apparatus according to an embodiment of the present invention. In this embodiment, the message management apparatus 11 includes: a metadata collecting module 111, a message task generating module 112, and a message task releasing module 113. The metadata collecting module 111 is adapted to collect the message metadata input by the administrator. The message task generating module 112 is adapted to packet the message metadata collected by the metadata collecting module 111, generate a message task file, and store the message task file in the File Transfer Protocol (FTP) server. The message task file includes message attributes, delivery rules and a message body.

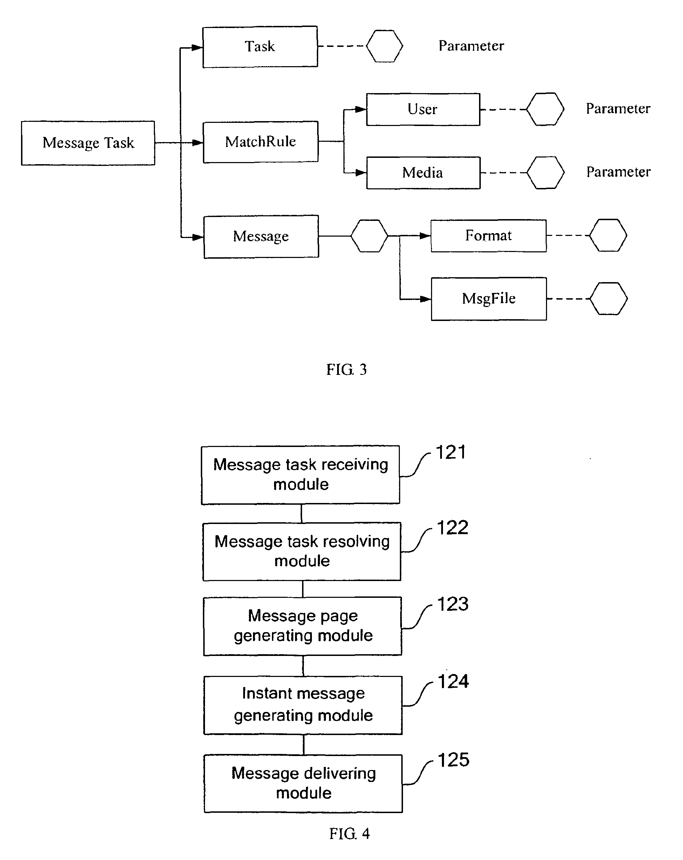

Figure 3 shows a style of the message task file.

The message task file may be in an EXtensible Markup Language (XML) format. A message task file in the XML format is shown below:

```
 <MessageTask Code=xxxx>
 <Task type="0" priority=" 1">
 <ConfirmFlag>0</ConfirmFlag>
 <Resend_time> 1000<Resend_time>
 <SaveFlag>0</SaveFlag>
 </Task>
 <MatchRule>' Type selected by the user and video play connection
 <user type="0">
        <DestAddress>user1,user2....</DestAddress>
 </user>
 <media code="*****">
        <Send_time>20071224105600</Send_time>
 </media>
 </MatchRule>
 Here is an example of defining message attributes and delivery rules:
 <Message Mode="0">
 <Title>message 2<Title>
 <content>"Welcome to IPTV system"</content>
 <icon >ftp://*****</icon1>
      <icon2>ftp://* * * * * </icon2>
      <form> rolling caption
        <bg_color>#FFFFFF</bg_color>
        <font>Arial</font>
        <font_color>#FFFFFF</font_color>
 <font_size> 17,20,22</font_size>
        <roll_times>2</roll_times>
        <roll_speed>1-255</roll_speed>
      </form>
 </Message>
 Here is an example of defining a message subject composed of texts and pictures:
 <message Mode="1">
 <Title>message 1<Title>
 <ShowDirect>0,1 </ShowDirect>
      <msgFile>
        <msgFileUrl>"ftp://* * * * * "</msgFiileUrl>
        <msgFileName>"index.htm"</msgFileName>
        <msgFileSize> 1234</msgFileSize>
        <lastModifyTime>20071224105600</lastModifyTime>
 </msgFile>
      <Form> displaying the basic information of the message background Form,
 optional, effective only to the page type
         <.Position> 12,112,13,14</position>
         <msg_size>1,2,3</msg_alpha>
         <msg_alpha> 1-255<msg_alpha>
         <display_time>1-3600</display_time>
  </Fonn>
  </message>
  Here is an example of defining a page file message body:
  <message Mode="2">
  <Title>message 1<Title>
  <ShowDirect>0,1 </ShowDirect>
  <msgUrl>"http://* * * * "</msgUrl>
  <Form> displaying the basic information of the message background Form, optional,
 effective only to the page type
        <Position> 12,112,13,14</position>
        <msg_size>1,2,3</msg_size>
        <msg_alpha>1-255</msg_alpha>
        <display_time>1-3600</display_time>
 </Form>
 </message>
      Here is an example of defining a link interaction message:
 </MessageTask>
```

The message task releasing module 113 is adapted to deliver a message task to the message processing server 12. The message task carries File Transfer Protocol (FTP) information of the message task file.

In this embodiment, the message metadata input by the administrator in the page carries: message attributes, message body, and delivery rules. The metadata collecting module 111 collects the message metadata input by the administrator, and delivers the message metadata to the message task generating module 112 which packets the message metadata into a message task file and saves the file to an FTP server. The message task releasing module 113 delivers a message task to the message processing server 12, where the message task carries the FTP information of the message task file.

Figure 4 shows a structure of a message processing server according to an embodiment of the present invention. In this embodiment, the message processing server 12 includes: a message task receiving module 121, a message task resolving module 122, a message page generating module 123, an instant message generating module 124, and a message delivering module 125.

The message task receiving module 121 is adapted to receive the message task file delivered by the message management apparatus 11.

The message task resolving module 122 is adapted to resolve the message task file received by the message task receiving module 121, and obtain the message metadata carried in the message task file, where the message metadata carries message attributes, a message body and delivery rules.

The message page generating module 123 is adapted to generate a message display page file according to the message metadata obtained by the message task resolving module 122, where the message display page file may be in the HTML format.

The instant message generating module 124 is adapted to generate an instant message.

The message delivering module 125 is adapted to deliver the message display page file generated by the message page generating module 123 and the instant message generated by the instant message generating module 124. The message delivering module 125 may deliver the message display page file to the message page server 13, and deliver the instant message to the message gateway 14. Optionally, the message delivering module 125 may deliver the instant message to the message display apparatus 15 directly. The instant message carries the URL, message attributes and delivery rules of the message display page file.

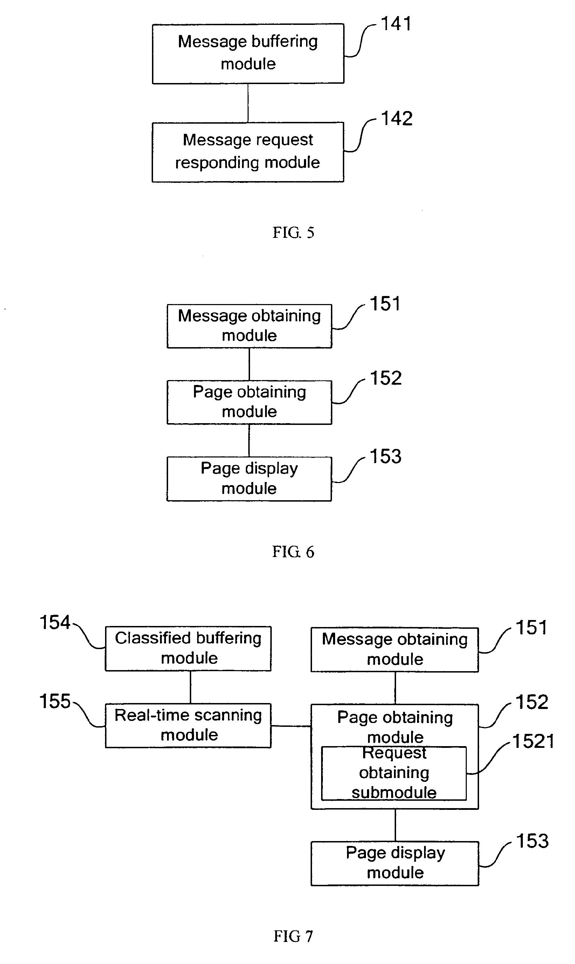

Figure 5 shows a structure of a message gateway according to an embodiment of the present invention. The message gateway 14 includes a message buffering module 141, adapted to perform classified buffering for the instant messages delivered by the message processing server 12 according to the message attributes in the instant message and a message request responding module 142, adapted to receive the request message of the message display apparatus 15, select an instant message requested by the message display apparatus 15 among the instant messages buffered by the message buffering module 141, and deliver the instant message to the message display apparatus 15.

In this embodiment, the message management apparatus 11 delivers a message task file to the message processing server 12. The message task resolving module 122 in the message processing server 12 resolves the message task file delivered by the message management apparatus 11, and obtains the message attributes, message body, and delivery rules of the message task file. The message page generating module 123 analyzes the message metadata obtained by the message task resolving module 122, finds a proper message page framework that matches the message type, and generates a message display page file automatically. The message delivering module 125 delivers the message display page file generated by the message page generating module 123 to the message page server 13. The message page server 13 deploys the message display page file according to preset rules. Meanwhile, the message delivering module 125 may deliver the instant message generated by the instant message generating module 124 to the message gateway 14. The message gateway 14 performs classified buffering for the instant messages according to the message attributes in the instant message.

Figure 6 shows a structure of a message display apparatus according to an embodiment of the present invention. Specifically, the message display apparatus 15 may be an STB.

The message display apparatus 15 includes a message obtaining module 151, adapted to obtain an instant message; a page obtaining module 152, adapted to obtain a message display page file according to the instant message obtained by the message obtaining module 151; and a page display module 153, adapted to display the message display page file obtained by the page obtaining module 152.

As shown in Figure 7, the message display apparatus 15 may further include a classified buffering module 154, adapted to buffer the instant messages obtained by the message obtaining module 151 to the message queue according to categories; and a real-time scanning module 155, adapted to scan the message queue in real time, and send the instant message compliant with the delivery rules according to the delivery rules of the instant message.

In this embodiment the delivery rules of the instant message may include:
checking consistency between the parameters, for example consistency between the current time and the message display time, between the STB account number and the sending object of the message, and between the current program and the program that matches the message; and
sending the instant message compliant with preset conditions to the page display module 153.

The page obtaining module 152 may include a request obtaining submodule 1521, adapted to obtain the URL of the message display page file from the instant messages which are compliant with the delivery rules and sent by the real-time scanning module 155, and request the message page server 13 for the message display page file according to the URL of the message display page file. The request sent by the request obtaining submodule 1521 to the message page server 13 may be an HTTP request.

After the message display apparatus 15 is powered on and authenticated, the message obtaining module 151 of the message display apparatus 15 obtains an instant message; the page obtaining module 152 obtains a message display page file according to the instant message obtained by the message obtaining module 151; and the page display module 153 displays the message display page file obtained by the page obtaining module 152. Besides, the classified buffering module 154 of the message display apparatus 15 may buffer the instant messages obtained by the message obtaining module 151 to the message queue according to categories. The real-time scanning module 155 scans the message queue in real time, and sends the instant messages compliant with the delivery rules to the page display module 153. After receiving the instant message from the real-time scanning module 152, the page display module 153 obtains the URL of the message display page file from the received instant message, and requests the message page server 13 for the message display page file for displaying according to the URL of the message display page file.

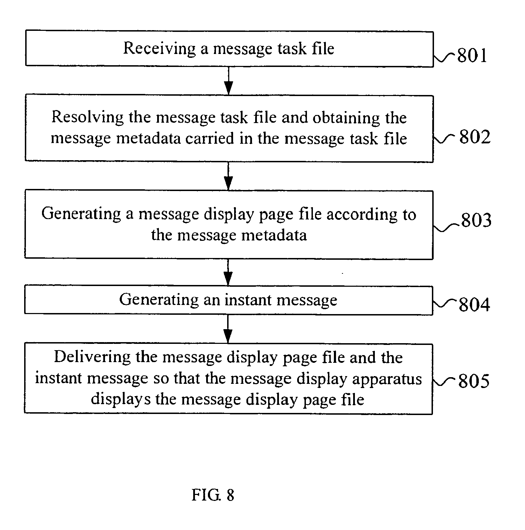

Figure 8 is a flowchart of a method for displaying an instant message according to an embodiment of the present invention. The method includes the following steps:
801: receiving a message task file.
802: resolving the message task file and obtaining the message metadata carried in the message task file. In this embodiment, the message task file is generated by the message management apparatus 11 through collecting the input message metadata and packeting the input message metadata.
803: generating a message display page file according to the message metadata.
804: generating an instant message.
805: delivering the message display page file and the instant message so that the message display apparatus 15 displays the message display page file.

In this embodiment, the process for the message display apparatus 15 to displays the message display page file includes the following.

The message display apparatus 15 receives the instant message from the message processing server 12 and obtains the message display page file for displaying according to the instant message.

After generating the message display page file, the message processing server 12 delivers the message display page file to the message page server 13, and delivers the generated instant message to the message gateway 14.

After receiving the instant message from the message processing server 12, the message gateway 14 delivers the instant message to the message display apparatus 15. Alternatively, according to the message attributes of the message display page file, the message gateway 14 buffers the instant message according to categories. After receiving the request message from the message display apparatus 15, the message gateway 14 selects an instant message requested by the message display apparatus 15 among the buffered instant messages and delivers the instant message to the message display apparatus 15.

Alternatively, the process for the message display apparatus 15 displaying the message display page file is: according to the message attributes of the instant message delivered by the message gateway 14, the message display apparatus 15 buffers the instant messages to the message queue according to categories, scans the message queue in real time, and selects the instant message compliant with the delivery rules according to the delivery rules of the instant message. Afterwards, the message display apparatus 15 obtains the URL of the message display page from the instant messages which are compliant with the delivery rules, requests the message page server 13 for the message display page file according to the URL of the message display page file, and displays the message display page file.

In this embodiment, the instant message carries the URL, message attributes and delivery rules of the message display page file.

A method, a system, and an apparatus for displaying an instant message are provided in an embodiment of the present invention to display the IPTV instant messages. The message management apparatus 11 delivers message metadata to the message processing server 12 for processing, forms the message display page file for displaying on the TV screen, and delivers the message display page file to the message page server 13. Meanwhile, the message management apparatus 11 delivers an instant message to the message display apparatus 15, and the message display apparatus 15 obtains the instant message and displays the message display page file according to the customized polices. The system for displaying instant messages in the embodiments of the present invention enables real-time display of the instant message without interrupting play of the TV program or deteriorating the effect of watching the TV program, and fulfills the purpose of advertisement. As regards system construction, only a few devices need to be added and deployed simply, almost without affecting the existing IPTV system.

It is apparent to those skilled in the art that the invention may be realized through hardware or through software complemented by a necessary versatile hardware platform. Therefore, the technical solution under the present invention can be embodied by a software product. The software product is stored in a nonvolatile storage medium (such as a CD-ROM, USB flash disk, or mobile hard disk) and incorporates several instructions which instruct a computer device (for example, a PC, server, or network device) to execute the method provided in each embodiment of the present invention.

It is understandable to those skilled in the art that the accompanying drawings are only schematic diagrams of preferred embodiments, and the modules or processes in the accompany drawings are not mandatory in implementing the present invention.

It is understandable to those skilled in the art that the modules of the apparatus in an embodiment of the present invention may be distributed into the apparatus as described in the embodiment, or located in one or more apparatuses unlike this embodiment. The modules of the foregoing embodiment may be combined into one module, or split into multiple submodules.

The sequence number of the embodiments of the present invention is designed for ease of description, and does not represent priority of the embodiments.

Although the invention is described through some exemplary embodiments, the invention is not limited to such embodiments.

## Claims

1. A method for displaying an instant message in an IPTV environment, comprising:
receiving (801), by a message processing server (12), a message task file comprising packed message metadata, wherein the message task file is generated by a message management apparatus (11);
obtaining (802), by the message processing server (12), message metadata carried in the message task file, wherein the message metadata includes message attributes, delivery rules and message body;
generating (803), by the message processing server (12), a message display page file according to the obtained message metadata;
**characterized by**:
generating (804), by the message processing server (12), an instant message according to the message metadata, wherein the instant message includes a Uniform Resource Locator, URL, of the message display page file, the message attributes and the delivery rules; and
delivering (805), by the message processing server (12), the message display page file and the instant message to make a message display apparatus (15) obtain the message display page file according to the URL included in the instant message and display the message display page file.

2. The method according to claim 1, **characterized in that** the message display page file is delivered to a message page server (13) and the instant message is delivered to a message gateway (14).

3. The method according to claim 2, **characterized in that** the method further comprises:
delivering, by the message gateway (14), the instant message to the message display apparatus (15).

4. The method according to claim 2, **characterized in that** the method further comprises:
buffering, by the message gateway (14), the instant message according to the message attributes of the instant message; and
receiving, by the message gateway (14), a request for the instant message from the message display apparatus (15).

5. The method according to claim 4, **characterized in that** the message display apparatus (15) displays the message display page file further comprises:
buffering, by the message display apparatus (15), the received instant message to a message queue according to the message attributes of the instant message;
scanning, by the message display apparatus (15), the message queue in real time;
selecting, by the message display apparatus (!5), an instant message compliant with delivery rules according to the delivery rules of the instant message.

6. A system for displaying an instant message in an IPTV environment, comprising:
a message processing server (12), adapted to receive a message task file comprising packed message metadata, wherein the message task file is generated by a message management apparatus (11); obtain message metadata carried in the message task file, wherein the message metadata includes message attributes, delivery rules and message body; generate a message display page file according to the obtained message metadata; **characterized in that**: said message processing server (12) generates an instant message according to the message metadata, wherein the instant message includes a Uniform Resource Locator, URL, of the message display page file, the message attributes, and the delivery rules; and delivers the message display page file and the instant message; and
a message display apparatus (15), adapted to obtain the instant message, obtain the message display page file according to the URL included in the instant message, and display the message display page file.

7. The system according to claim 6, **characterized in that** the system further comprises:
a message page server (13), adapted to receive the message display page file delivered by the message processing server; and
a message gateway (14), adapted to receive instant messages delivered by the message processing server and buffer the instant message according to the message attributes of the instant message.

8. A message processing server for displaying an instant message in an IPTV environment, comprising:
a message task receiving module (121), adapted to receive a message task file comprising packed message metadata, wherein the message task file is generated by a message management apparatus (11);
a task resolving module (122), adapted to obtain message metadata carried in the message task file, wherein the message metadata includes message attributes, delivery rules and message body;
a message page generating module (123), adapted to generate a message display page file according to the obtained message metadata;
**characterized in that**:
a instant message generating module (124), adapted to generate an instant message_according to the message metadata, wherein the instant message includes a Uniform Resource Locator, URL, of the message display page file, the message attributes and the delivery rules; and
a message delivering module (125), adapted to deliver the message display page file generated by the message page generating module and the instant message generated by the instant message generating module to make a message display apparatus (15) obtain the message display page file according to the URL included in the instant message and display the massage display page file.

## Patentansprüche

1. Verfahren zum Anzeigen einer Instant Message in einer IPTV-Umgebung, das Folgendes umfasst:
Empfangen (801) durch einen Nachrichtenverarbeitungsserver (12) einer Nachrichtenaufgabendatei, die gepackte Nachrichtenmetadaten enthält, wobei die Nachrichtenaufgabendatei durch eine Nachrichtenmanagementvorrichtung (11) erzeugt wird;
Erhalten (802) durch den Nachrichtenverarbeitungsserver (12) von Nachrichtenmetadaten, die in der Nachrichtenaufgabendatei geführt werden, wobei die Nachrichtenmetadaten Nachrichtenattribute, Lieferregeln und einen Nachrichtenkörper enthalten; und
Erzeugen (803) durch den Nachrichtenverarbeitungsserver (12) einer Nachrichtenanzeigeseitendatei in Übereinstimmung mit den erhaltenen Nachrichtenmetadaten;
**gekennzeichnet durch**:
Erzeugen (804) **durch** den Nachrichtenverarbeitungsserver (12) einer Instant Message in Übereinstimmung mit den Nachrichtenmetadaten, wobei die Instant Message einen Uniform Resource Locator, URL, der Nachrichtenanzeigeseitendatei, die Nachrichtenattribute und die Lieferregeln enthält; und
Liefern (805) **durch** den Nachrichtenverarbeitungsserver (12) der Nachrichtenanzeigeseitendatei und der Instant Message, damit eine Nachrichtenanzeigevorrichtung (15) die Nachrichtenanzeigeseitendatei in Übereinstimmung mit dem URL, der in der Instant Message enthalten ist, erhält und die Nachrichtenanzeigeseitendatei anzeigt.

2. Verfahren nach Anspruch 1, **dadurch gekennzeichnet, dass** die Nachrichtenanzeigeseitendatei zu einem Nachrichtenseitenserver (13) geliefert wird und die Instant Message zu einem Nachrichten-Gateway (14) geliefert wird.

3. Verfahren nach Anspruch 2, **dadurch gekennzeichnet, dass** das Verfahren ferner Folgendes umfasst:
Liefern durch das Nachrichten-Gateway (14) der Instant Message zu der Nachrichtenanzeigevorrichtung (15).

4. Verfahren nach Anspruch 2, **dadurch gekennzeichnet, dass** das Verfahren ferner Folgendes umfasst:
Puffern durch das Nachrichten-Gateway (14) der Instant Message in Übereinstimmung mit den Nachrichtenattributen der Instant Message; und
Empfangen durch das Nachrichten-Gateway (14) einer Anforderung für die Instant Message von der Nachrichtenanzeigevorrichtung (15).

5. Verfahren nach Anspruch 4, **dadurch gekennzeichnet, dass** das Anzeigen der Nachrichtenanzeigeseitendatei durch die Nachrichtenanzeigevorrichtung (15) ferner Folgendes umfasst:
Puffern durch die Nachrichtenanzeigevorrichtung (15) der empfangenen Instant Message in einer Nachrichtenwarteschlange in Übereinstimmung mit den Nachrichtenattributen der Instant Message;
Abtasten durch die Nachrichtenanzeigevorrichtung (15) der Nachrichtenwarteschlange in Echtzeit;
Auswählen durch die Nachrichtenanzeigevorrichtung (15) einer Instant Message, die mit Lieferregeln konform ist, in Übereinstimmung mit den Lieferregeln der Instant Message.

6. System zum Anzeigen einer Instant Message in einer IPTV-Umgebung, das Folgendes umfasst:
einen Nachrichtenverarbeitungsserver (12), der dazu ausgelegt ist, eine Nachrichtenaufgabendatei zu empfangen, die gepackte Nachrichtenmetadaten enthält, wobei die Nachrichtenaufgabendatei durch eine Nachrichtenmanagementvorrichtung (11) erzeugt wird; Nachrichtenmetadaten, die in der Nachrichtenaufgabendatei geführt werden, zu erhalten, wobei die Nachrichtenmetadaten Nachrichtenattribute, Lieferregeln und einen Nachrichtenkörper enthalten; eine Nachrichtenanzeigeseitendatei in Übereinstimmung mit den erhaltenen Nachrichtenmetadaten zu erzeugen; **dadurch gekennzeichnet, dass**: der Nachrichtenverarbeitungsserver (12) eine Instant Message in Übereinstimmung mit den Nachrichtenmetadaten erzeugt, wobei die Instant Message einen Uniform Resource Locator, URL, der Nachrichtenanzeigeseitendatei, die Nachrichtenattribute und die Lieferregeln enthält; und die Nachrichtenanzeigeseitendatei und die Instant Message liefert; und
eine Nachrichtenanzeigevorrichtung (15), die dazu ausgelegt ist, die Instant Message zu erhalten, die Nachrichtenanzeigeseitendatei in Übereinstimmung mit dem in der Instant Message enthaltenen URL zu erhalten und die Nachrichtenanzeigeseitendatei anzuzeigen.

7. System nach Anspruch 6, **dadurch gekennzeichnet, dass** das System ferner Folgendes umfasst:
einen Nachrichtenseiten-Server (13), der dazu ausgelegt ist, die Nachrichtenanzeigeseitendatei, die von dem Nachrichtenverarbeitungsserver geliefert wird, zu empfangen; und
ein Nachrichten-Gateway (14), das dazu ausgelegt ist, Instant Messages, die von dem Nachrichtenverarbeitungsserver geliefert werden, zu empfangen und die Instant Message in Übereinstimmung mit den Nachrichtenattributen der Instant Message zu puffern.

8. Nachrichtenverarbeitungsserver zum Anzeigen einer Instant Message in einer IPTV-Umgebung, der Folgendes umfasst:
ein Nachrichtenaufgaben-Empfangsmodul (121), das dazu ausgelegt ist, eine Nachrichtenaufgabendatei zu empfangen, die gepackte Nachrichtenmetadaten enthält, wobei die Nachrichtenaufgabendatei durch eine Nachrichtenmanagementvorrichtung (11) erzeugt wird;
ein Aufgabenausführungsmodul (122), das dazu ausgelegt ist, Nachrichtenmetadaten, die in der Nachrichtenaufgabendatei geführt werden, zu erhalten, wobei die Nachrichtenmetadaten Nachrichtenattribute, Lieferregeln und einen Nachrichtenkörper enthalten;
ein Nachrichtenseiten-Erzeugungsmodul (123), das dazu ausgelegt ist, eine Nachrichtenanzeigeseitendatei in Übereinstimmung mit den erhaltenen Nachrichtenmetadaten zu erzeugen;
**dadurch gekennzeichnet, dass**:
ein Instant Message-Erzeugungsmodul (124) dazu ausgelegt ist, eine Instant Message in Übereinstimmung mit den Nachrichtenmetadaten zu erzeugen, wobei die Instant Message einen Uniform Resource Locator, URL, der Nachrichtenanzeigeseitendatei, die Nachrichtenattribute und die Lieferregeln enthält; und
ein Nachrichtenliefermodul (125) dazu ausgelegt ist, die Nachrichtenanzeigeseitendatei, die durch das Nachrichtenseiten-Erzeugungsmodul erzeugt wird, und die Instant Message, die durch das Instant Message-Erzeugungsmodul erzeugt wird, zu liefern, um eine Nachrichtenanzeigevorrichtung (15) zu veranlassen, die Nachrichtenanzeigeseitendatei in Übereinstimmung mit dem in der Instant Message enthaltenen URL zu erhalten und die Nachrichtenanzeigeseitendatei anzuzeigen.

## Revendications

1. Procédé permettant d'afficher d'un message instantané dans un environnement de télévision au protocole Internet (IPTV), comprenant :
la réception (801), par un serveur de traitement de messages (12), d'un fichier de tâches de messagerie comprenant des métadonnées de message en paquets, le fichier de tâches de messagerie étant généré par un appareil de gestion de messages (11),
la récupération (802), par le serveur de traitement de messages (12), de métadonnées du message transportées dans le fichier de tâches de messagerie, les métadonnées du message incluant des attributs du message, des règles de délivrance et le corps du message,
la génération (803), par le serveur de traitement de messages (12), d'un fichier de page d'affichage du message en fonction des métadonnées de message obtenues,
**caractérisé par**
la génération (804), par le serveur de traitement de messages (12), d'un message instantané en fonction des métadonnées du message, le message instantané incluant l'adresse uniforme de ressources, URL, du fichier de page d'affichage du message, les attributs du message et les règles de délivrance, et
la délivrance (805), par le serveur de traitement de messages (12), du fichier de page d'affichage du message et du message instantané afin de faire en sorte qu'un appareil d'affichage de messages (15) récupère le fichier de page d'affichage du message en fonction de l'adresse URL incluse dans le message instantané et qu'il affiche le fichier de page d'affichage du message.

2. Procédé selon la revendication 1, **caractérisé en ce que** le fichier de page d'affichage du message est délivré à un serveur de pages de messages (13) et **en ce que** le message instantané est délivré à une passerelle de messages (14).

3. Procédé selon la revendication 2, **caractérisé en ce que** le procédé comprend en outre :
la délivrance, par la passerelle de messages (14), du message instantané à l'appareil d'affichage de messages (15).

4. Procédé selon la revendication 2, **caractérisé en ce que** le procédé comprend en outre :
la mise en mémoire tampon, par la passerelle de messages (14), du message instantané en fonction des attributs de message du message instantané, et
la réception, par la passerelle de messages (14), d'une demande provenant de l'appareil d'affichage de messages (15) pour le message instantané.

5. Procédé selon la revendication 4, **caractérisé en ce que** l'appareil d'affichage de messages (15), affichant le fichier de page d'affichage du message, comprend en outre :
la mise en mémoire tampon, par l'appareil d'affichage de messages (15), du message instantané reçu dans une file d'attente de messages en fonction des attributs de message du message instantané,
le balayage en temps réel, par l'appareil d'affichage de messages (15), de la file d'attente de messages,
la sélection, par l'appareil d'affichage de messages (15), d'un message instantané se conformant aux règles de délivrance, en fonction des règles de délivrance du message instantané.

6. Système permettant d'afficher un message instantané dans un environnement de télévision au protocole Internet (IPTV), comprenant :
un serveur de traitement de messages (12), conçu pour recevoir un fichier de tâches de messagerie comprenant des métadonnées de message en paquets, dans lequel le fichier de tâches de messagerie est généré par un appareil de gestion de messages (11) ; pour récupérer des métadonnées de message transportées dans le fichier de tâches de messagerie, les métadonnées de message incluant des attributs du message,
des règles de délivrance et le corps du message ; pour générer un fichier de page d'affichage du message en fonction des métadonnées de message obtenues, **caractérisé en ce que** : ledit serveur de traitement de messages (12) génère un message instantané en fonction des métadonnées de message, le message instantané incluant l'adresse uniforme de ressources, URL, du fichier de page d'affichage du message, les attributs du message et les règles de délivrance ; et délivre un fichier de page d'affichage du message et le message instantané, et
un appareil d'affichage de messages (15), conçu pour récupérer le message instantané, pour récupérer le fichier de page d'affichage du message en fonction de l'adresse URL incluse dans le message instantané, et pour afficher le fichier de page d'affichage du message.

7. Système selon la revendication 6, **caractérisé en ce que** le système comprend en outre :
un serveur de pages de messages (13), conçu pour recevoir le fichier de page d'affichage du message délivré par le serveur de traitement de messages, et
une passerelle de messages (14), conçue pour recevoir des messages instantanés délivrés par le serveur de traitement de messages et pour mettre en mémoire tampon le message instantané en fonction des attributs de message du message instantané.

8. Serveur de traitement de messages permettant d'afficher un message instantané dans un environnement de télévision au protocole Internet (IPTV), comprenant :
un module de réception de tâches de messagerie (121), conçu pour recevoir un fichier de tâches de messagerie comprenant des métadonnées de message en paquets, dans lequel le fichier de tâches de messagerie est généré par un appareil de gestion de messages (11),
un module de résolution de tâches (122), conçu pour récupérer des métadonnées de message transportées dans le fichier de tâches de messagerie, dans lequel les métadonnées de message incluent les attributs du message, les règles de délivrance et le corps du message,
un module de génération de pages de message (123), conçu pour générer un fichier de page d'affichage du message en fonction des métadonnées de message obtenues,
**caractérisé par** :
un module de génération de message instantané (124), conçu pour générer un message instantané en fonction des métadonnées de message, dans lequel le message instantané inclut l'adresse uniforme de ressources, URL, du fichier de page d'affichage du message, les attributs du message et les règles de délivrance, et
un module de délivrance de messages (125), conçu pour délivrer le fichier de page d'affichage du message généré par le module de génération de pages de message ainsi que le message instantané généré par le module de génération de message instantané afin de faire en sorte qu'un appareil d'affichage de messages (15) récupère le fichier de page d'affichage du message en fonction de l'adresse URL incluse dans le message instantané, et qu'il affiche le fichier de page d'affichage du message.
